# EUROPÄISCHE PATENTSCHRIFT

(11) **EP 3 237 136 B1**
(45) Veröffentlichungstag und Bekanntmachung des Hinweises auf die Patenterteilung: **05.09.2018**
(21) Anmeldenummer: 15801429.0
(22) Anmeldetag: 27.11.2015
(51) Int. Cl.: B23D 25/12, B23D 35/00

(54) **VORRICHTUNG UND VERFAHREN ZUR VERSTELLUNG DES MESSERSPALTES BEI TROMMELSCHEREN ZUM QUERTEILEN VON METALLBAND**
DEVICE AND METHOD FOR ADJUSTMENT OF THE BLADE GAP IN DRUM SHEARS FOR CROSS CUTTING A METAL STRIP
DISPOSITIF ET PROCÉDÉ DE RÉGLAGE DE L'ÉCART ENTRE LAMES POUR DES CISAILLES À TAMBOURS DESTINÉES À LA SÉPARATION TRANSVERSALE D'UN RUBAN MÉTALLIQUE

(30) Priorität: 22.12.2014 AT 509392014
(43) Veröffentlichungstag der Anmeldung: 01.11.2017
(73) Patentinhaber: Primetals Technologies Austria GmbH, 4031 Linz (AT)
(72) Erfinder: PEITL, Wolfgang, 4490 St. Florian (AT); SCHOEDL, Christian, 4642 Sattledt (AT)
(74) Vertreter: Metals@Linz
(86) Internationale Anmeldenummer: PCT/EP2015/077906
(87) Internationale Veröffentlichungsnummer: WO 2016/102147

(56) Entgegenhaltungen:
- EP-A1- 0 771 603
- CN-A- 103 752 940
- DE-A1- 19 749 170
- DE-A1- 19 908 118
- DE-U1- 9 213 619
- FR-A1- 2 549 754
- JP-A- 2008 030 134

## Beschreibung

Die vorliegende Erfindung betrifft eine Vorrichtung und ein Verfahren zur, vorzugsweise stufenlosen, Verstellung des Messerspaltes von Trommelscheren zum Schneiden von Metallband.

Einerseits betrifft die Erfindung eine Trommelschere mit zwei Messertrommeln zum Querteilen eines Metallbandes, wobei die Messertrommeln beim Querteilen quer zur Bandlaufrichtung über einen Exzenter zwischen einer offenen und einer geschlossenen Position verfahren werden können.

Trommelscheren zur Umsetzung dieses Verfahrens umfassen zwei achsparallel angeordnete, gegenläufig drehende Trommeln, die in einem geringen Abstand zueinander montiert sind, sodass das produzierte Metallband zwischen den beiden Trommeln hindurchgefördert wird, ohne diese zu berühren.
An den Trommeloberflächen sind Messer montiert, deren Klingen in radialer Richtung ein kurzes Stück über den Trommelradius hinausragen und mit deren Hilfe das durchlaufende Metallband zu einem gewünschten Zeitpunkt quer zur Laufrichtung geschnitten werden kann, ohne dass dabei die Bandgeschwindigkeit verringert werden muss. Dabei drehen sich üblicherweise die Trommeln mit einer solchen Winkelgeschwindigkeit, dass die Geschwindigkeit der Mantelflächen der Trommeln jener des Metallbandes entspricht.

Andererseits betrifft die Erfindung ein Verfahren zum Verstellen eines Messerspalts einer Trommelschere mit zwei Messertrommeln zum Querteilen von Metallband, wobei die Messertrommeln über einen Exzenter quer zur Bandlaufrichtung zwischen einer offenen Position und einer geschlossenen Position verfahren werden können und sich die Messertrommeln zwischen den Zeitpunkten, an denen das Metallband quergeteilt wird, in der offenen Position befinden und das Metallband zwischen den Messertrommeln durchgefördert wird und die Messertrommeln mit einer Winkelgeschwindigkeit rotieren, die der Bandlaufgeschwindigkeit entspricht, und wobei die Messertrommeln zu dem Zeitpunkt, an dem das Metallband quergeteilt wird, in die geschlossene Position verfahren werden.

Beim Verfahren der gegenständlichen Erfindung wird ein endloses Metallband, das auch aus einzelnen Bandabschnitten mit zum Teil unterschiedlicher Dicke und unterschiedlicher Materialzusammensetzung zusammengeschweißt sein kann, zwischen den Messertrommeln der Trommelschere durchgefördert und an bestimmten Stellen durch die Trommelschere quer zur Laufrichtung durch kurzzeitiges Anstellen der Messertrommeln an das Band geschnitten, wobei die Bandgeschwindigkeit in der Regel nicht verringert wird. Das beanspruchte Verfahren ist auch für Trommelscheren mit hoher Bandgeschwindigkeit - sog. Hochgeschwindigkeitsscheren (engl. high speed shears) geeignet.

Das Querteilen selbst erfolgt durch kurzzeitiges Anstellen einer oder beider Trommeln mittels Exzenter senkrecht zur Bewegungsrichtung des Bandes, wobei die Rotationsbewegung der Trommeln zueinander stets so synchronisiert ist, sodass zum Schnittzeitpunkt die Messerklingen der beiden Trommeln einander gegenüberliegen und durch das Anstellen des Exzenters auf das Metallband eine Scherkraft ausüben, die dieses trennt. Dabei wird der minimale Abstand zwischen den Messerklingen, gemessen in Bandlaufrichtung, der zum Schnittzeitpunkt vorliegt, als Messerspalt bezeichnet.
Weiters besteht zwischen der Dicke des querzuteilendenden Metallbandes, seinen Materialeigenschaften und dem Schnittspalt ein Zusammenhang, der es erlaubt, die Klingenabnutzung zu minimieren. Es ist daher wünschenswert, für Metallbänder mit unterschiedlicher Dicke bzw. Materialeigenschaften den jeweils optimalen Schnittspalt einzustellen, ohne dass dafür zusätzliche Rüstzeit in Kauf genommen werden muss.
Werden Messer mit geradlinig verlaufender Schneidklinge verwendet, so kann die Messerspaltverstellung während des laufenden Betriebes, d.h. ohne zusätzliche Rüstzeiten, durchgeführt werden, indem die Rotation der beiden gegenläufigen Rollen um einen geringen Winkelbetrag verschoben wird, sodass die beiden Messerklingen zum Zeitpunkt der größten Annäherung eine unterschiedliche Distanz zueinander, gemessen in Bandlaufrichtung, besitzen.
Dafür können z.B. schrägverzahnte Synchronzahnräder an den Achsen der Messertrommeln verwendet werden, sodass die Messertrommeln in axialer Richtung geringfügig gegeneinander verschoben werden und die besagte Winkeldifferenz entsteht: dabei werden jedoch auch die Messer in axialer Richtung gegeneinander versetzt, was nur die Verwendung von Messern mit geradlinig verlaufender Schneidkante erlaubt. Überdies müssen bei dieser Methode die Klingen bei achsparallelem Einbau in die Messertrommeln zum Schnittzeitpunkt das Metallband auf ganzer Breite gleichzeitig durchtrennen, was zum Auftreten von sehr hohen Schneidkräften führt und wegen der mechanischen Belastung nicht vorteilhaft ist. Werden andererseits die geradlinigen Messer leicht gegen die Trommelachse verkippt, so reduziert dies zwar die Schnittkräfte, da die Klingen beim Schneiden gegeneinander abrollen, jedoch verläuft der Schnittvorgang nicht mehr symmetrisch zur Mittellinie des Metallbandes, sondern beginnt an einer Bandkante und endet an der anderen, was jedoch zu unerwünschten Spannungen und unsauberen Schnitten des Metallbandes bis hin zu Bandrissen führt.
Um dieses Problem zu umgehen, werden daher zusehends Messer mit gekrümmt verlaufender Klinge verwendet, sodass die Scherwirkung der Messerklinge beim Querteilen des Bandes bei der Bandmitte beginnend einsetzt und sich symmetrisch zu den Bandkanten hin ausbreitet. Auf diese Weise werden einerseits die auftretenden Schnittkräfte reduziert, da die Messerklingen über die Schnittdauer verteilt gegeneinander abrollen, andererseits verlaufen die beim Schnitt auftretenden Zugspannungen symmetrisch zur Bandmitte, was die Gefahr eines Bandrisses stark verringert. Bei derartigen Scheren erfordert jedoch die Verstellung des Messerspalts einen Bedienereingriff; Messertrommeln mit Messern, die eine gekrümmt verlaufende Schnittkante aufweisen, sind aus DE19749170A1 bekannt. Solche Messer mit gekrümmt verlaufender Klinge müssen jedoch stets symmetrisch zur Mitte des Metallbandes montiert sein und die Messertrommeln dürfen ihre axiale Position zueinander nicht verändern, da bei einer seitlichen Verschiebung relativ zum durchgeförderten Metallband die Lage der Klingen zueinander bzw. die Schnittsymmetrie nicht mehr gegeben wäre. Weiters sind aus der Literatur feststehende Scheren zum Querteilen von Metallband bekannt, die über einen Mechanismus zur Messerspaltverstellung mittels Keilen verfügen, wobei die Messer ihre relative Position in Richtung der Schneidkante beibehalten, sodass auch Messer mit gekrümmt verlaufender Schneidkante verwendet werden können, siehe CN103752940 sowie DE9213619U1. Überdies ist aus JP2008030134 ein Mechanismus für eine hydraulisch betätigte Messerklemmung an einer Trommelschere bekannt.

Es ist daher die Aufgabe der vorliegenden Erfindung, Trommelscheren zum Querteilen von Metallband dahingehend weiterzuentwickeln, dass Messer mit symmetrischem Schnittverlauf, wie sie z.B. Messer mit gekrümmt verlaufender Schnittkante aufweisen, verwendet werden können, wobei der Messerspalt ohne zusätzliche Rüstzeiten automatisiert während des Produktionsbetriebes der Trommelschere eingestellt werden kann.

Diese Aufgabe wird durch eine Trommelschere mit zwei Messertrommeln zum Querteilen eines Metallbandes gelöst, wobei die Messertrommeln beim Querteilen quer zur Bandlaufrichtung über einen Exzenter zwischen einer offenen und einer geschlossenen Position verfahren werden können und zum Einstellen des Messerspalts zumindest eine Messertrommel folgende Merkmale umfasst:
- ein in axialer Richtung angeordnetes und in einer senkrecht dazu verlaufenden tangentialen Richtung verschiebbares Messer mit zumindest einer ebenen Fläche;
- eine Klemmvorrichtung mit zumindest einem Aktuator;
- zwei in axialer Richtung angeordnete Keile mit je einer Keilfläche, wobei das Messer über den ersten, in axialer Richtung verschiebbaren Keil in einer senkrecht dazu verlaufenden tangentialen Richtung verfahren werden kann der zweite Keil fest mit der Messertrommel verbunden ist;
- eine zentrale, entlang der Trommelachse angeordnete, zum Teil aus der Messertrommel hinausragende und mit der Messertrommel mitrotierende Justierstange zum Verfahren des zweiten beweglichen Keiles in axialer Richtung, einen Mitnehmer und eine mechanische Kopplung, wobei der erste Keil durch den Mitnehmer über die mechanische Kopplung von der Justierstange in axialer Richtung verschoben werden kann;
- eine Verstellvorrichtung zum Verschieben der Justierstange in axialer Richtung mittels des Aktuators; und
- eine Steuervorrichtung, die mit der Verstellvorrichtung und der Klemmvorrichtung signaltechnisch verbunden ist, sodass mittels des Aktuators der Klemmvorrichtung die Messerklemmung vorübergehend gelöst und das Messer durch das Betätigen der Verstellvorrichtung in einer senkrecht zur axialen Richtung verlaufenden tangentialentangentialer Richtung verfahren werden kann.

Somit behalten die Messertrommeln beim Verstellen des Schnittspaltes ihre relative Position zueinander in axialer Richtung bei, was den Vorteil hat, dass auch Messer mit gekrümmter Schnittkante verwendet werden können. Das Messer wird über eine Klemmvorrichtung in der Messertrommel geklemmt, wobei die Klemmvorrichtung über zumindest einen Aktuator verfügt, mit dem die Klemmung vorübergehend gelöst werden kann. Das Messer besitzt zumindest eine ebene Fläche, die als Kontakt- und Gleitfläche zum ersten Keil ausgebildet ist, wobei die Kraft zum Verschieben des Messers in einer senkrecht zur axialen Richtung verlaufenden tangentialen Richtung vom ersten Keil an der ebenen Fläche aufgebracht wird. Bei gelöster Klemmung lässt sich durch Verschieben des ersten Keiles in axialer Richtung die tangentiale Position des Messers und somit der Messerspalt verändern. Der erste Keil kann über eine axial in der Messertrommel angebrachte, in axialer Richtung verschiebbare Justierstange bewegt werden und ist mit der Justierstange über einen Mitnehmer und eine mechanische Kopplung verbunden, wobei der Mitnehmer die Kraft der axial angeordneten Justierstange an die mechanische Kopplung überträgt. Da sich der erste Keil bei der axialen Verstellung entlang der Keilfläche des zweiten,
fest mit der Trommel verbundenen Keils bewegt, findet neben der axialen Bewegung des ersten Keiles auch eine senkrecht dazu verlaufende tangentiale Verschiebung
des ersten Keiles statt, wodurch das Messer eine Verschiebung in diese tangentiale Richtung ausführt und der Messerspalt verändert wird. Die besagte mechanische Kopplung dient dazu, die rein axiale Bewegung der Justierstange und des fest mit ihr verbundenen Mitnehmers in die besagte gleichzeitige Bewegung des ersten Keiles in radialer und tangentialer Richtung umzusetzen. Die Justierstange ist zur Bewegung in axialer Richtung mit einer entsprechenden Verstellvorrichtung gekoppelt, die sich außerhalb der Messertrommel befindet und die Drehbewegung der Messertrommel nicht mitvollzieht. Dies hat den Vorteil, dass sich auf der Messertrommel nur relativ wenige, mechanisch unempfindliche und größtenteils passiv betätigte Komponenten der Vorrichtung zur Verstellung des Messerspalts befinden, was einen einfachen Aufbau ermöglicht und sich vorteilhaft auf die Störanfälligkeit auswirkt. Empfindlichere Komponenten wie Motoren, Getriebe und Hydraulikpumpen können außerhalb der Messertrommel einfacher gewartet und besser vor äußeren Einflüssen geschützt werden und werden weniger beeinträchtigt, da sie die Drehbewegung der Messertrommel nicht mitmachen. Die Verstellvorrichtung der Justierstange und die besagte Klemmvorrichtung sind mit einer Steuereinrichtung signaltechnisch verbunden: dadurch ist es dieser Steuereinrichtung möglich, durch Betätigen des Aktuators der Klemmvorrichtung die Messerklemmung vorübergehend zu lösen und das Messer durch das Betätigen der Verstellvorrichtung in tangentialer Richtung zu verfahren, sodass der gewünschte Messerspalt erreicht wird. Weil auf diese Weise die Verstellung des Messerspalts allein durch ein - senkrecht zur axialen Richtung - tangentiales Verstellen des Messers von zumindest einer Messertrommel und somit keine axiale Verschiebung der beiden Messertrommeln zueinander erfolgt, können auch Messer mit einer gekrümmten Schnittkante verwendet werden; überdies verlängert die Einstellung des Messerspaltes auf den jeweils optimalen Wert in Abhängigkeit der Dicke des querzuteilenden Metallbandes und seiner Materialzusammensetzung die Lebensdauer der verwendeten Messer. Da weiters durch diese Merkmale die einzelnen Schritte der Messerspaltverstellung mit rein maschinellen Mitteln durchgeführt werden können, kann der Messerspalt zeitnahe und ohne Bedienereingriff unmittelbar an der Trommelschere auf den jeweils optimalen Wert für das querzuteilende Metallband eingestellt werden, noch während dieses zwischen den Messertrommeln durchgefördert wird und ohne dass die Produktion unterbrochen werden muss, sodass keine zusätzliche Rüstzeit für die Anpassung des Messerspaltes entsteht und die erfindungsgemäße Aufgabe gelöst wird.
Eine bevorzugte Ausführungsform einer Trommelschere mit stufenloser Schnittspaltverstellung umfasst zwei Messertrommeln die beide für das Schneiden eines Metallbandes mittels eines Exzenters senkrecht zur Bandlaufrichtung bewegt werden können und die folgende definierte Positionen quer zur Bandlaufrichtung einnehmen:
- Geschlossene Position: der Exzenter ist angestellt, die Messertrommeln sind einander zum Schneiden des Metallbandes maximal angenähert.
- Offene Position: der Exzenter ist nicht angestellt, die Messertrommeln befinden sich in einem definierten Abstand zueinander, sodass das zu produzierende Metallband zwischen den Rollen hindurchgeführt wird.
Das in der Messertrommel tangential verschiebbar gelagerte Messer besitzt einen annähernd viereckigen Querschnitt, wobei die über die Mantelfläche der Messertrommel hinausragende Schnittkante sowie die Schnittkante des Messers der zweiten Messertrommel eine gekrümmte Form besitzen, sodass der Schnittverlauf im Metallband symmetrisch in der Mitte des Metallbandes beginnt und sich zu seinen Kanten hin fortsetzt. In einer alternativen Ausführungsform können jedoch auch Messer mit geradlinig verlaufender Schnittkante verwendet werden.

Bei einer vorteilhaften Ausführungsform weist die Klemmvorrichtung Zugfedern auf, wobei die Klemmvorrichtung hydraulisch durch den Aktuator gelöst werden kann und ein Hydraulikfluid von einem Bereich außerhalb der Messertrommel über eine Drehdurchführung und eine axiale Bohrung in der Justierstange zum Aktuator geleitet werden kann, was den Vorteil hat, dass zum Lösen der Klemmvorrichtung nur sehr wenige bewegte Teile verwendet werden müssen und die Druckbeaufschlagung der Hydraulikflüssigkeit von einem Aggregat außerhalb der Messertrommel erfolgt, das nicht mit der Trommel mitrotiert und daher relativ gut geschützt und einfach gewartet werden kann.

In einer weiteren bevorzugten Ausführungsform besitzt die Klemmvorrichtung einen Klemmblock, der mittels Zugfedern permanent angestellt wird, wobei der Klemmblock an der rückwärtigen Seite des Messers dieses mit dessen Unterseite gegen eine entsprechende Ausnehmung an der Trommeloberfläche und an dessen Vorderseite mit einer ebenen Fläche gegen den ersten Keil klemmt, sowie einen hydraulisch betätigten Aktuator, sodass durch die Betätigung die Klemmwirkung der Zugfedern vorübergehend aufgehoben und die Messerklemmung gelöst wird. Dabei kann die Hydraulikleitung zu dem mit der Messertrommel mitrotierenden Aktuator über eine Drehdurchführung und eine axiale Bohrung in der Justierstange verlaufen.

Es ist vorteilhaft, wenn die Steuervorrichtung mit einer Regelvorrichtung verbunden ist und die Verstellvorrichtung zumindest einen Sensor besitzt, der die Position eines bewegten Teiles der Verstellvorrichtung an die Regelvorrichtung rückmelden kann, woraus die Position des ersten Keiles folgt, wobei die Regelvorrichtung den Messerspalt in Abhängigkeit der Dicke und der Materialeigenschaften des zu schneidenden Metallbandes berechnen kann und anhand des Sensors der Verstellvorrichtung über die Steuervorrichtung regeln kann, sowie dass der Zustand der Klemmeinrichtung über einen Sensor erfasst und der Regeleinrichtung rückgemeldet werden kann. Da der optimale Wert des Messerspaltes von der Dicke des zu schneidenden des Metallbandes sowie seiner Materialzusammensetzung abhängt und diese Daten in der Regel bereits als elektronische Signale in der Prozessleitebene zur Verfügung stehen, ist es ohne großen Aufwand möglich, diese Signale einer Regelvorrichtung zuzuleiten, die daraus den optimalen Messerspalt und die dafür notwendige axiale Position der Justierstange selbsttätig errechnet und die Steuereinrichtung zum Betätigen der Verstellvorrichtung, die die Justierstange in axialer Richtung verfährt, entsprechend ansteuert, wobei der Aktuator der Verstellvorrichtung über einen oder mehrere Sensoren verfügt, die die axiale Position der Justierstange an die Regeleinrichtung rückmelden. Ebenso ist es mit geringem Aufwand möglich, den funktionalen Zustand der Klemmvorrichtung - wie z.B. 'geöffnet' und 'geschlossen' - an die Regeleinrichtung rückzumelden, sodass die Klemmvorrichtung ebenfalls über die Steuereinrichtung von der Regelvorrichtung betätigt werden kann: auf diese Weise kann der gesamte Ablauf zum Einstellen des Messerspaltes automatisiert werden, was einen prozessökonomischen Vorteil darstellt.

In einer weiteren bevorzugten Ausführungsform sind die Steuereinrichtung zur axialen Verstellung der Justierstange und die Klemmvorrichtung des Messerblocks in eine Regeleinrichtung eingebunden, die folgende Merkmale besitzt:
- signaltechnische Übermittlung der Dicke und der Materialeigenschaften des zu schneidenden Metallbandes;
- Steuervorrichtung zum axialen Verfahren der Justierstange und zum hydraulischen Lösen des Messerblocks;
- zumindest einen Sensor, mit dem die axiale Position eines beweglichen Teiles der Verstellvorrichtung erfasst und an die Regeleinrichtung rückgemeldet werden kann;
- eine signaltechnische Übermittlung des Zustands der Aktuatoren der Klemmvorrichtung.
Dabei veranlasst die Regeleinrichtung die Steuereinrichtung, die Aktuatoren des Messerklemmblocks hydraulisch zu betätigen, wobei die Hydraulikleitung von einem Bereich außerhalb der Messertrommel über eine Drehdurchführung und eine axiale Bohrung in der Justierstange verläuft.

Weiters ist es vorteilhaft, wenn die mechanische Kopplung zwischen dem ersten Keil und dem Mitnehmer derart ausgeführt ist, dass der erste Keil einen Nockenkamm besitzt und der Mitnehmer über einen Nockenmitnehmer in den Nockenkamm des ersten Keils eingreift, sodass der erste Keil vom Mitnehmer in axialer Richtung bewegt werden kann. Durch das Verfahren des ersten beweglichen Keiles in axialer Richtung gleitet dieser entlang der schrägen Keilfläche des zweiten, fest mit der Messertrommel verbundenen Keiles und führt dadurch neben der Bewegung in axialer Richtung auch eine Bewegung senkrecht dazu in tangentialer Richtung aus, die der Verschiebung des Messers relativ zur Messertrommel entspricht. Es ist Aufgabe der mechanischen Kopplung, für eine einfache und stabile Kraftübertragung zwischen dem Mitnehmer, der nur in axialer Richtung bewegt wird, und dem ersten, beweglichen Keil, der durch Verschieben des Mitnehmers gleichzeitig in axialer und in dazu senkrecht verlaufender tangentialer Richtung bewegt wird, zu sorgen: dies wird beispielsweise dadurch gelöst, dass der erste, axial verschiebbare Keil einen Nockenkamm besitzt und der Mitnehmer über einen Nockenmitnehmer in den Nockenkamm des ersten Keils eingreift: durch diese Ausgestaltung werden für die besagte mechanische Kopplung nur einfache und robuste mechanische Elemente benötigt, deren Geometrie den auftretenden Kräften angepasst werden kann und die im Bedarfsfall in einfacher Weise gereinigt oder ausgetauscht werden können; komplexere Bauteile wie Lager oder Gelenke werden dadurch nicht benötigt.

Nach einer weiteren Ausführungsform verfügt der Mitnehmer über eine starre Verbindung zur Justierstange und verfügt die Messertrommel im Bereich des Mitnehmers über eine Materialausnehmung, sodass der Mitnehmer im Innenbereich der Messertrommel zwischen den beiden Endlagen in axialer Richtung verfahren werden kann, wobei die Endlagen des Mitnehmers dem maximal bzw. minimal einstellbaren Messerspalt entsprechen. Es ist Aufgabe des Mitnehmers, die axiale Bewegung der Justierstange über die mechanische Kopplung auf den ersten beweglichen Keil zu übertragen, wobei die dabei auftretenden Kräfte zu einem entsprechenden Biegemoment am Mitnehmer führen. Es ist daher vorteilhaft, den Mitnehmer solcherart starr mit der Justierstange zu verbinden und seine Geometrie derart auszugestalten, dass das Biegemoment nur eine geringe elastische Verformung des Mitnehmers von z.B. maximal 0.1 mm am fest mit dem Mitnehmer verbundenen Nockenmitnehmer verursacht. Für eine derartige stabile und verwindungsarme Ausgestaltung kann der Mitnehmer beispielsweise an seinem Fußende ein Innengewinde besitzen, mittels dem er auf ein entsprechendes Außengewinde der Zug- und Schubstange aufgeschraubt und dadurch mit dieser starr verbunden wird.
Diese Ausgestaltung des Mitnehmers hat gegenüber z.B. einem einfachen Bolzen den Vorteil, dass die Länge und Durchmesser der Gewinde sowie die Form des Mitnehmers derart dimensioniert werden können, dass das bei der Kraftübertragung auf den Nockenkamm auftretende Biegemoment am Mitnehmer zu einer noch tolerierbaren elastischen Verformung des Mitnehmers führt, es jedoch zu keiner funktionalen Einschränkung oder Beschädigung desselben kommt, sodass eine mechanisch sehr zuverlässige und wenig störungsanfällige Konstruktion der beweglichen Teile vorliegt.

In einer bevorzugten Ausführungsform ist die Justierstange am innerhalb der Messertrommel liegenden Ende sowie an mindestens einer weiteren Stelle mittels eines Gleitlagers in der Messertrommel gelagert und mit der Messertrommel verbunden und am außerhalb der Messertrommel liegenden Ende mit einer nichtrotierenden, Axialkräfte übertragenden Druckscheibe über zumindest ein Lager verbunden, sodass die Justierstange über die Druckscheibe in axialer Richtung mittels der Verstellvorrichtung bewegt werden kann, wobei sich am innerhalb der Messertrommel liegenden Ende der Justierstange eine Druckfeder befindet, die ein Spiel der Justierstange in axialer Richtung eliminiert. Dabei rotiert die Justierstange mit der Messertrommel mit und muss zur Verstellung des Messerspaltes in axialer Richtung verfahren werden, wofür sie am innerhalb der Messertrommel liegenden Ende sowie an mindestens einer weiteren Stelle mittels eines Gleitlagers in der Messertrommel gelagert ist. Zusätzlich ist die Justierstange an ihrem innerhalb der Messertrommel liegenden Ende über eine Druckfeder fest mit der Messertrommel verbunden, wobei sich diese Druckfeder über den gesamten axialen Verstellbereich der Justierstange zwischen ihren beiden axialen Endlagen in einem komprimierten Zustand befindet und somit stets eine nach außen gerichtete Kraft auf die Justierstange ausübt. Weiters ist am außerhalb der Messertrommel liegenden Ende der Justierstange eine Druckscheibe montiert, die über zumindest ein Lager, das axial- und Radialkräfte aufnehmen kann, mit der Justierstange verbunden ist, sodass diese Druckscheibe in axialer Richtung bewegt werden kann, jedoch die Drehbewegung der Trommel bzw. der Justierstange nicht mitvollzieht.
Der Vorteil dieser Art der Lagerung der Justierstange und ihre Verbindung mit einer Druckscheibe besteht darin, dass die axiale Verschiebung der Justierstange durch eine Vorrichtung außerhalb der Messertrommel erfolgen kann, die von der Rotationsbewegung der Messertrommel entkoppelt ist. Die Druckfeder stellt eine robuste und konstruktiv einfache Lösung dar, das mechanische Spiel der Justierstange bei Verschiebung in axialer Richtung zu eliminieren.

Dabei ist es vorteilhaft, wenn die Druckscheibe in allen über den Exzenter quer zur Bandlaufrichtung angestellten Positionen der Messertrommel über eine mechanische Führung mit einer Druckplatte verbunden ist, die von der Verstellvorrichtung bewegt werden kann, wobei die Verstellvorrichtung feststehenden ist. Da die Messertrommel mittels eines Exzenters zwischen der offenen und der geschlossen Position geschwenkt werden kann, vollzieht auch die an der Justierstange montierte Druckscheibe diese Bewegung quer zur Bandlaufrichtung mit. Um die Druckscheibe über einen Aktuator in axialer Richtung bewegen zu können, ist sie über eine mechanische Führung, die in senkrechter Richtung zur Justierstange verläuft, in allen durch den Exzenter angestellten Positionen der Messertrommel mit einer Druckplatte verbunden, welche von einem Aktuator in axialer Richtung bewegt wird.
Auf diese Weise kann die axiale Bewegung der Justierstange von einer Verstellvorrichtung bewirkt werden, die feststehend montiert ist und deswegen einfacher gewartet sowie besser vor Umwelteinflüssen geschützt werden kann.

Bei einer alternativen Ausführungsform besitzt die an der Justierstangebefestigte Druckscheibe eine Nut, in die die Druckplatte über die mechanische Führung eingreift. Die mechanische Führung ist durch an der Druckplatte senkrecht zur Trommelachse befestigte Rollen ausgeführt, wobei die Druckplatte in der offenen Position der Messertrommel über die senkrecht angeordneten Rollen vollständig in eine radiale Nut der Druckscheibe eingreift und so den Kraftschluss zum axialen Verfahren der Justierstange herstellt. Dabei ist die Geometrie der Druckscheibe und ihrer Nut sowie der Druckplatte und der Rollen so gewählt, dass auch allen durch den Exzenter angestellten Positionen der Messertrommel die Rollen der Druckplatte zumindest noch teilweise in die Nut der Druckscheibe eingreifen und dadurch immer eine mechanische Führung der Druckplatte in der Nut der Druckscheibe gewährleistet ist.
In einer alternativen Ausführungsform der Trommelschere wird nur eine der beiden Messertrommeln über einen Exzenter quer zur Bandlaufrichtung zum Schneiden des Metallbandes angestellt, während die zweite Messertrommel feststehend ausgeführt ist und nur eine Rotationsbewegung um die eigene Achse durchführt. Dabei verfügt nur die zweite Messertrommel über den Mechanismus zur Messerspaltverstellung. Da die zweite Messertrommel keine Bewegung quer zur Bandlaufrichtung ausführt, entfallen die Druckplatte und die mechanische Führung und die Druckscheibe wird direkt von einer feststehenden Verstellvorrichtung in axialer Richtung bewegt.

Bei einer weiteren Ausführungsform erfolgt die Messerspaltverstellung in der offenen Position der Messertrommel und die Druckplatte und die mechanische Führung zwischen der Druckplatte und der Druckscheibe ist so ausgeführt, dass beim Verfahren der Druckplatte in axialer Richtung kein Kippmonent auf die Druckscheibe ausgeübt wird. Die Druckplatte und die mechanische Führung zwischen Druckplatte und Druckscheibe sind vorteilhafterweise so ausgeführt, dass beim Verfahren der Druckplatte in axialer Richtung kein Kippmoment auf die Druckscheibe ausgeübt wird. Dies kann beispielsweise durch eine entsprechende Geometrie der Druckplatte und der mechanischen Führung gewährleistet werden, bei der die von der Druckplatte auf die Druckscheibe übertragene Kraft in axialer Richtung auf mehrere, symmetrisch zur Achse der Justierstange verteilte Teilkräfte aufgeteilt wird, deren einzelne Kippmomente sich aufheben.
Diese Ausgestaltung hat den Vorteil, dass sich die Justierstange beim Verfahren nicht verbiegt und die Reibungskräfte in den Gleitlagern, mit denen die Justierstange in der Messertrommel gelagert ist, minimiert werden.

In einer bevorzugten Ausführungsform ist die Druckplatte gabelförmig ausgeführt und die mechanische Führung in der Druckscheibe umfasst zumindest gerade Anzahl von senkrecht zur Trommelachse angeordnete Rollen, wobei diese derart an der Druckplatte angeordnet sind, dass in der offenen Position der Trommel die Rollen spiegelsymmetrisch zur Achse der Justierstangeverteilt sind und sich die in axialer Richtung übertragene Kraft gleichmäßig auf alle Rollen verteilt.

Vorzugsweise besitzt die Verstellvorrichtung einen hydraulischen Aktuator zum Verfahren der Justierstange in axialer Richtung. Die Druckplatte muss zum Einstellen des Messerspaltes nur in axialer Richtung von einer feststehenden Verstellvorrichtung bewegt werden, wobei diese Verstellvorrichtung in einer bevorzugten Ausführungsform einen hydraulisch betätigten Aktuator besitzt, mit dem die Druckplatte in axialer Richtung verfahren kann. Eine solche Ausgestaltung ist robust, zuverlässig und besitzt nur wenige bewegliche Teile. Ein weiterer Vorteil besteht darin, dass nur der hydraulische Aktuator der Verstellvorrichtung im unmittelbaren Gefahrenbereich der Produktionsanlage montiert sein muss, während beispielsweise die Hydraulikpumpe, die Steuereinrichtung der hydraulischen Verstellvorrichtung und benötigte Ventile in einem von der Produktionsanlage abgesetzten Raum untergebracht werden können.

Weiter ist es vorteilhaft, wenn der mindestens eine Sensor der Verstellvorrichtung so ausgeführt ist, dass damit die Position der Druckplatte erfasst und an die Regeleinrichtung übermittelt wird. Die Verstellvorrichtung zum axialen Verfahren der Druckplatte verfügt über mindestens einen Sensor, der die Position eines beweglichen Teiles der Verstellvorrichtung erfasst, über die auf die die axiale Position der Druckplatte und somit auf den Wert des Messerspaltes rückgeschlossen werden kann, wobei dieser Sensorwert an die Regeleinrichtung übermittelt wird, sodass dadurch der Regelkreis geschlossen wird und der optimale Messerspalt in Abhängigkeit der Dicke und der Materialeigenschaften des zu schneidenden Metallbandes von der Regeleinrichtung eingestellt werden kann. In einer bevorzugten Ausführungsform verfügt der hydraulische Aktuator über einen Sensor, der die axiale Position der Druckplatte erfasst und an die Regeleinrichtung übermittelt.

In einer bevorzugten Ausführungsform ist der Übergangsbereich an beiden Seiten der Messertrommel zwischen dem Ende der Mantelfläche der Messertrommel und dem Trommelschaft gerundet und auspoliert, sodass mechanische Spitzenspannungen aufgrund der für die Justierstange, den Mitnehmer, die mechanische Kopplung, die Gleitlager und die Druckfeder nötigen Materialausnehmungen in der Trommel vermieden werden. Obwohl die Festigkeit der Messertrommel aufgrund der besagten Ausnehmungen geschwächt ist, werden dadurch hohe mechanische Spannungen besser abgeleitet und die Bildung von Mikrorissen erschwert, die ansonsten von Materialunebenheiten in der Oberfläche begünstigt werden. Diese Maßnahmen wirken sich vorteilhaft auf die Lebensdauer der Messertrommel aus.

Um eine möglichst unmittelbare Umsetzung der erfindungsgemäßen Aufgabe zu ermöglichen, ist es vorteilhaft, eine Trommelschere zu verwenden, bei der die beiden Messertrommeln über einen Exzenter quer zur Bandlaufrichtung zwischen einer offenen und einer geschlossenen Position verfahren werden können und sich die Messertrommeln zwischen den Zeitpunkten, an denen das Metallband quergeteilt wird, in der offenen Position befinden und das Metallband zwischen den Trommeln durchgefördert wird und die Trommeln mit einer Winkelgeschwindigkeit rotieren, die der Bandlaufgeschwindigkeit entspricht, und wobei zumindest eine Messertrommel folgende Merkmale aufweist:
- ein in axialer Richtung angeordnetes und in einer senkrecht dazu verlaufenden tangentialen Richtung verschiebbares Messer mit zumindest einer ebenen Fläche;
- eine Klemmvorrichtung zur Klemmung des Messers;
- eine Vorrichtung zum Verfahren des Messers in einer senkrecht zur axialen Richtung verlaufenden tangentialen Richtung zur Verstellung des Messerspalts, bestehend aus zumindest zwei axial angeordneten Keilen, wobei zumindest der erste Keil in axialer Richtung beweglich angeordnet ist; und
- eine Verstellvorrichtung zur Verschiebung des ersten
Keiles in axialer Richtung, wobei die Verstellvorrichtung und die Klemmvorrichtung von außerhalb der Messertrommel betätigt werden können und wobei der Verstellvorgang folgende Schritte umfasst:
- Abbremsen der Messertrommeln aus der Bandlaufgeschwindigkeit und Verdrehen der Messertrommel mit dem in einer senkrecht zur axialen Richtung verlaufenden tangentialen Richtung verschiebbaren Messer um die eigene Achse in die Messerjustierposition, wobei das Messer in ungeklemmtem Zustand von der Schwerkraft in der Messertrommel gehalten wird;
- Lösen der Klemmvorrichtung;
- Einstellen des gewünschten Messerspaltes durch Verfahren des ersten Keiles in axialer Richtung durch Betätigung der Verstellvorrichtung;
- Feststellen der Klemmvorrichtung; und
- Beschleunigen der Messertrommeln auf die Bandlaufgeschwindigkeit. Ein Vorteil dieser Ausgestaltung der Messertrommel besteht darin, dass die Messertrommeln zum Einstellen des Schnittspaltes ihre relative Position zueinander in axialer Richtung beibehalten und daher auch Messer mit gekrümmt verlaufender Schnittkante verwendet werden können, wodurch der Schnittverlauf symmetrisch zur Bandmitte verläuft und ungünstig verlaufende Zugspannungen im Metallband, die zum Abriss des Metallbandes führen können, verhindert werden und die auftretenden Schnittkräfte im Vergleich zu achsparallel montierten Messern mit geradliniger Schnittkante verringert werden, da die Schnittkräfte nicht wie bei Messern mit gerader Schnittkante extrem kurzzeitig auftreten, sondern aufgrund des in der Bandmitte beginnenden und an den seitlichen Bandkanten endenden Schnittverlaufes gleichmäßig über die Schnittdauer verteilt werden.

In einer für den Betrieb der Trommelschere vorteilhaften Ausprägung die Klemmvorrichtung und die Verstellvorrichtung zur Verschiebung des ersten Keiles an eine Regeleinrichtung gekoppelt, wobei das Einstellen des gewünschten Messerspalts durch Betätigung der Verstellvorrichtung in Abhängigkeit der Dicke und der Materialeigenschaften des querzuteilenden Metallbandes von der Regelvorrichtung durchgeführt wird, wobei die Verstellvorrichtung über zumindest einen Sensor zur Erfassung der Position eines bewegten Teiles der Verstellvorrichtung verfügt, aus der die Position des ersten Keiles folgt, und die auch über einen Sensor der Klemmvorrichtung den funktionalen Zustand der Klemmvorrichtung erfasst und die Klemmvorrichtung betätigt, sodass der gesamte Vorgang der Messerspaltverstellung automatisiert abläuft.
Dabei werden der Regeleinrichtung die Dicke des zu schneidenden Metallbandes und seine Materialeigenschaften signaltechnisch übermittelt, woraus die Regeleinrichtung den optimalen Wert des Messerspalts selbsttätig errechnet und die über den Wert des Sensors, der die Position eines bewegten Teiles der Verstellvorrichtung erfasst, auf die axiale Position der Justierstange und somit auf den Wert des Messerspaltes rückschließen kann, wodurch zusammen mit dem Sensor, der den funktionalen Zustand der Klemmvorrichtung erfasst, der Regelkreis geschlossen wird und es somit der Regeleinrichtung ermöglicht wird, die erforderlichen Schritte zur Einstellung des optimalen Messerspalts automatisiert durchzuführen.
Zum Ausgleich des mechanischen Spiels in der Verstellvorrichtung regelt die Regeleinrichtung in bevorzugter Weise das Verfahren der Justierstange in axialer Richtung solcherart, dass das Anfahren der axialen Zielposition der Justierstange immer aus derselben Richtung erfolgt: müsste die Justierstange zum Erreichen der Zielposition in die andere Richtung bewegt werden, so wird sie in einer bevorzugten Ausführung des erfindungsgemäßen Verfahrens zuvor ein entsprechendes Stück in Gegenrichtung verfahren, um einen mechanischen Totgang auszugleichen. Durch diese Vorgehensweise wird die Genauigkeit der Einstellung des Messerspalts deutlich erhöht.
Die Durchführung der Verstellung des Messerspalts erfolgt in einer bevorzugten Ausführung des erfindungsgemäßen Verfahrens automatisiert, was sowohl aus prozessökonomischen Gründen wünschenswert ist, weil dieser Vorgang dadurch zeitlich optimiert und reproduzierbar ablaufen kann, als auch aus sicherheitstechnischen Gründen vorteilhaft ist, weil durch den automatisierten Ablauf kein Bedienereingriff im unmittelbaren Gefahrenbereich der Messertrommel nötig ist.

In einer besonders bevorzugten Ausführungsform der vorliegenden Erfindung erfolgt das Einstellen des gewünschten Messerspalts während des laufenden Produktionsbetriebes, sodass für die Messerspaltverstellung keine zusätzliche Rüstzeit erforderlich ist. Konkret erfolgt das Einstellen des optimalen Messerspalts in Abhängigkeit der Dicke und der Materialeigenschaften des querzuteilenden Metallbandes während der laufenden Produktion des Metallbandes zwischen jenen Zeitpunkten, zu denen das Metallband quergeteilt werden muss. Dies ist möglich, weil sich während dieser Zeitspanne die Messertrommeln in der geöffneten Position befinden, in der eine allfällige nötige Verstellung des Messerspalts erfolgen kann, und der zu produzierende Bandabschnitt während dieser Zeitspanne zwischen den Messertrommeln durchgefördert wird. Dadurch kann die benötigte Rüstzeit, die zur Verstellung des Messerspalts an herkömmlichen Trommelscheren gemäß dem Stand der Technik erforderlich ist, entfallen.

Weitere Vorteile und Merkmale der vorliegenden Erfindung ergeben sich aus der nachfolgenden Beschreibung nicht einschränkender Ausführungsbeispiele, wobei auf die folgenden Figuren Bezug genommen wird, die Folgendes zeigen:
Fig. 1a einen Querschnitt durch eine Trommelschere mit den beiden Messertrommeln in offener Position
Fig. 1b einen Querschnitt durch eine Trommelschere mit den beiden Messertrommeln in geschlossener Position
Fig. 1c einen Querschnitt durch eine erfindungsgemäße Trommelschere mit den beiden Messertrommeln in Messerjustierposition
Fig. 2a einen Querschnitt durch eine erfindungsgemäße Messertrommel senkrecht zur Trommelachse mit einer Vorrichtung zum Verfahren des Messers in tangentialer Richtung
Fig. 2b eine Draufsicht auf eine erfindungsgemäße Messertrommel mit der Lage der Keile und des Messers mit gekrümmter Schnittkante
Fig. 3 einen Querschnitt durch eine erfindungsgemäße Messertrommel entlang der Trommelachse mit einer Verstelleinrichtung außerhalb der Messertrommel zum Verstellen des Messerspalts
Fig. 4 ein Blockdiagramm der Regeleinrichtung zur Regelung der Messerspaltverstellung
Fig. 5a eine schematische Darstellung einer gabelförmigen Druckplatte mit Rollen
Fig. 5b eine seitliche Ansicht der Druckscheibe mit den Rollen und der Druckplatte bei offener Position der Messertrommeln
Fig. 5c eine seitliche Ansicht der Druckscheibe mit den Rollen und der Druckplatte bei geschlossener Position der Messertrommeln

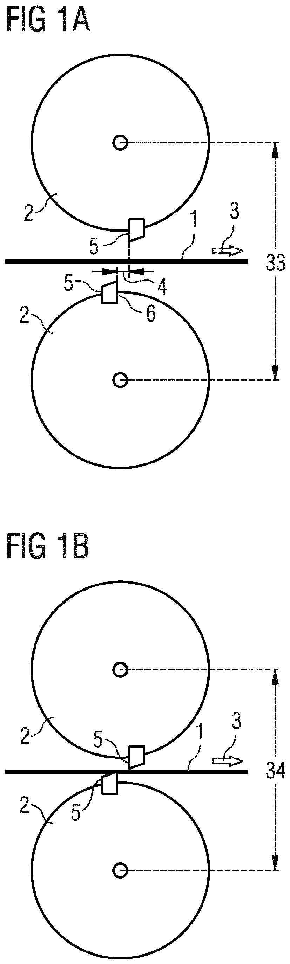

Fig. 1a zeigt einen seitlichen Querschnitt durch eine Trommelschere. Dabei wird das produzierte Metallband 1 zwischen den beiden Messertrommeln 2 in Bandlaufrichtung 3 durchgefördert, wobei sich die Messertrommeln 2 in der geöffneten Position 33 befinden. Beide Messertrommeln 2 besitzen jeweils ein Messer 5 und sind in ihrer Rotationsbewegung synchronisiert, sodass die Messer 5 bei jeder Umdrehung einander beiderseits des Metallbandes 1 gegenüberliegen. Dabei wird der parallel zum Metallband 1 gemessene Abstand zwischen den Schnittkanten der Messer 5 als Messerspalt 4 bezeichnet. In der erfindungsgemäßen Ausführungsform umfasst die untere Messertrommel ein normal zu ihrer axialen Richtung in tangentialer Richtung verschiebbares Messer mit zumindest einer ebenen Fläche 6, über die es mittels einer Keilvorrichtung in tangentialer Richtung verschoben wird.

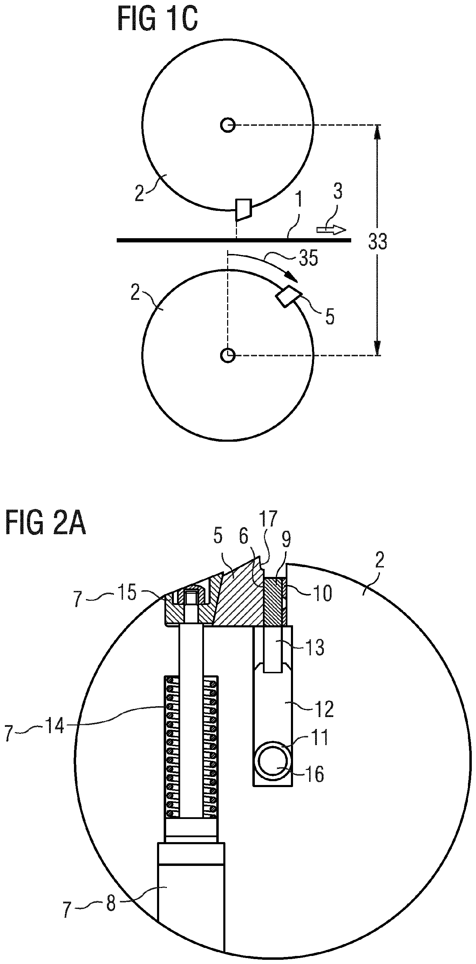

Fig 1b zeigt die Messertrommeln 2 quer zur Bandlaufrichtung 3 einander angenähert und in die Schnittposition 34 verfahren, sodass das Metallband 1 von den Messern 5 durchtrennt wird. In Fig 1c ist ein seitlicher Querschnitt durch eine erfindungsgemäße Ausführungsform einer Trommelschere dargestellt, wobei sich die beiden Messertrommeln 2 in der offenen Position 33 befinden, während ein Metallband 1 in Bandlaufrichtung 3 zwischen den Messertrommeln 2 durchgefördert wird, und wobei die untere Messertrommel mit dem in tangentialer Richtung verstellbaren Messer 5 in die Messerjustierposition 35 verdreht ist, sodass das Messer 5 ohne herauszufallen entklemmt und anschließend zur Einstellung eines geänderten Messerspalts in tangentialer Richtung verfahren werden kann. Fig. 2a zeigt einen Querschnitt senkrecht zur Achse einer erfindungsgemäßen Ausführungsform einer Messertrommel 2 mit normal zu ihrer axialen Richtung tangential verstellbarem Messer 5, das eine in axialer Richtung gekrümmt verlaufende Schnittkante 17 besitzt. Hierbei wird das Messer 5 über eine Klemmvorrichtung 7, bestehend aus einem Klemmblock 15, Zugfedern 14 und Aktuatoren 8, in einer Ausnehmung der Messertrommel 2 fixiert, wobei die Klemmkraft zum Anstellen des Klemmblocks 15 von Zugfedern 14 aufgebracht wird. Die Aktuatoren 8 können hydraulisch betätigt werden, sodass sie die Federkräfte aufheben und die Klemmung des Messers gelöst wird. Durch Verschieben einer entlang der Trommelachse verlaufenden Justierstange 11 in axialer Richtung wird über einen Mitnehmer 12 und eine mechanische Kopplung 13 der erste, bewegliche Keil 9 in axialer Richtung verschoben, wobei er an dem zweiten, fest mit der Messertrommel 2 verbundenen Keil 10 entlanggleitet und auch eine Bewegung in tangentialer Richtung ausführt. Über die ebene Fläche 6 des Messers 5 wird diese tangentiale Bewegung des ersten Keiles 9 an das Messer 5 übertragen. Die Justierstange 11 besitzt in der erfindungsgemäßen Ausführung eine axiale Bohrung 16, über die die Hydraulikflüssigkeit zum Betätigen der Aktuatoren 8 geleitet wird.

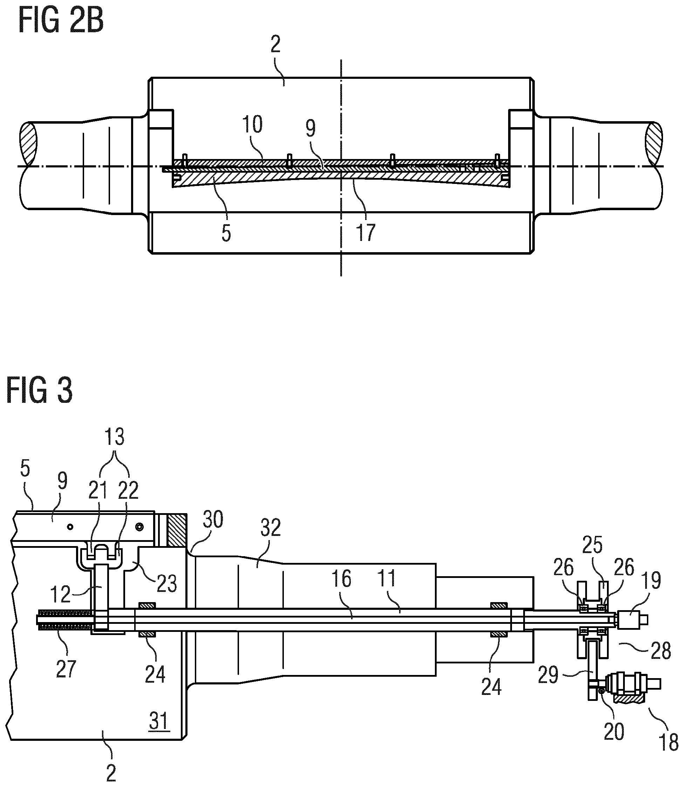

Fig. 2b zeigt eine Draufsicht auf eine erfindungsgemäße Ausführungsform einer Messertrommel 2, in der die Lage des Messers 5 mit einer gekrümmten Schnittkante 17, des ersten, beweglichen Keiles 9 und des zweiten, fest mit der Messertrommel verbundenen Keiles dargestellt sind;

Fig. 3 zeigt einen Querschnitt durch eine erfindungsgemäße Messertrommel entlang der Trommelachse mit einer Verstelleinrichtung außerhalb der Messertrommel zum Verstellen des Messerspalts. Dabei enthält die Messertrommel 2 ein Messer 5, das mittels eines ersten, beweglichen Keiles 9 und eines zweiten, fest mit der Messertrommel verbundenen Keiles 10 in durch axiales Verschieben der entlang der Messertrommel verlaufenden Justierstange 11 tangentialer Richtung normal zur axialen Richtung bewegt werden kann, wobei die axiale Bewegung der Justierstange 11 über einen starr mit ihr verbundenen Mitnehmer 12 und eine mechanische Kopplung 13, bestehend aus einem Nockenkamm 21 und einem Nockenmitnehmer 22 am Mitnehmer, an den ersten Keil übertragen wird. Die Justierstange 11 verfügt über eine axiale Bohrung 16 und eine Drehdurchführung 19, über die die Hydraulikflüssigkeit zum Ansteuern des Aktuators der Messerklemmeinrichtung geleitet wird. Die Justierstange 11 ist an zumindest 2 Stellen mittels Gleitlagern 24 in der Messertrommel 2 gelagert und zum Ausgleich des mechanischen Spiels in axialer Richtung über eine Druckfeder 27 mit der Messertrommel 2 verbunden. Am außerhalb der Messertrommel 2 liegenden Ende der Justierstange 11 ist eine Druckscheibe 25 montiert, die über zumindest zwei Radial- und Tangentialkräfte aufnehmende Lager 26 von der Rotation der Justierstange 11 entkoppelt ist. Die Druckscheibe 25 ist über eine mechanische Führung 28 mit einer Druckplatte 29 verbunden und kann über diese in axialer Richtung verfahren werden. Die Druckplatte 29 wird in der erfindungsgemäßen Ausgestaltung von einem Aktuator 18 einer Verstellvorrichtung bewegt, der über einen Sensor 20 zur Erfassung der Position der Druckplatte 29 verfügt.

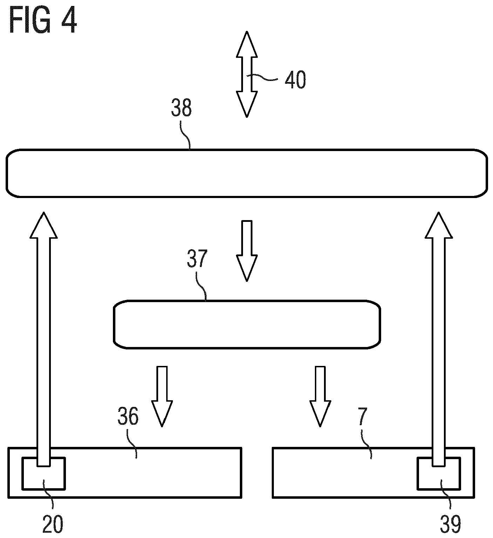

Fig. 4 zeigt das Regelschema des erfindungsgemäßen Verfahrens: hierbei ist die Regeleinrichtung 38 signaltechnisch 40 an die Prozessleitebene angebunden, wodurch der Regeleinrich tung 38 die Dicke und die Materialeigenschaften des querzuteilenden Metallbandes mitgeteilt werden. Zusätzlich werden der Regeleinrichtung 38 über den Sensor 39 der Klemmeinrichtung 7 deren funktionaler Zustand sowie über den Sensor 20 der Verstellvorrichtung 36 ein Positionswert eines Aktors rückgemeldet, aus dem der aktuelle Wert des Messerspalts errechnet werden kann, sodass die Regeleinrichtung 38 daraus die für die Verstellung des Messerspalts nötigen Steuersignale als automatisierte Sequenz an die Steuervorrichtung 37 übermitteln kann, die wiederum die Klemmvorrichtung 7 und die Verstellvorrichtung 36 entsprechend ansteuert.
Wegen der für den Messerspaltverstellmechanismus nötigen Materialausnehmungen 23 in der Messertrommel 2 ist an beiden Seiten der Übergangsbereich 30 zwischen dem Rand der Mantelfläche 31 und dem Trommelschaft 32 gerundet und auspoliert.

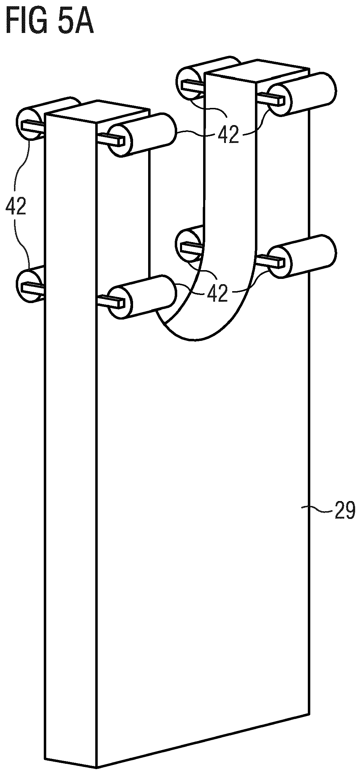

Fig. 5a zeigt eine erfindungsgemäße Ausgestaltung der gabelförmigen Druckplatte 29, auf der mehrere Rollen 42 senkrecht zur Achse der Messertrommel montiert sind.

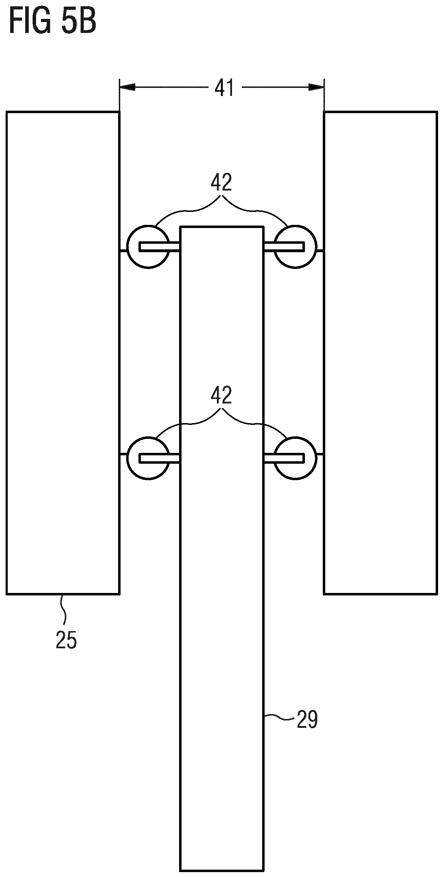

Fig. 5b zeigt entsprechend der erfindungsgemäßen Ausführung die relative Position der Druckplatte 29 und der Druckscheibe 25 bei offener Position 33 der Messertrommeln: die Druckplatte 29 greift beim Verstellen des Messerspalts über die Rollen 42 in die radiale Nut 41 der Druckscheibe 25 ein, sodass die Kraftübertragung von der Druckplatte 29 auf die Druckscheibe 25 in axialer Richtung symmetrisch erfolgt und kein Kippmonent auf die Druckscheibe 25 auftritt.

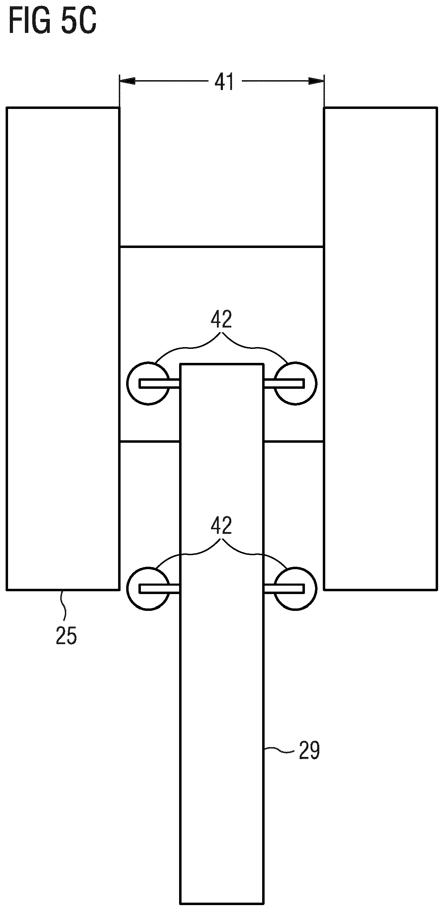

Fig. 5c zeigt entsprechend der erfindungsgemäßen Ausführung die relative Position der Druckplatte 29 und der Druckscheibe 25 bei geschlossener Position 34 der Messertrommeln: die Geometrie der Druckscheibe 25 und der Druckplatte 29 ist so gewählt, dass die Rollen 42 auch zum Schnittzeitpunkt des Metallbandes einen teilweisen Eingriff in die radiale Nut 41 besitzen, sodass beim Schwenken der Messertrommeln von der offenen Position 33 in die geschlossenen Position 34 und zurück eine mechanische Führung zwischen der Druckplatte 29 und der Druckscheibe 25 gegeben ist.

### Bezugszeichenliste:

- 1: Metallband
- 2: Messertrommel
- 3: Bandlaufrichtung
- 4: Messerspalt
- 5: Messer
- 6: ebene Fläche
- 7: Klemmvorrichtung
- 8: Aktuator der Klemmvorrichtung
- 9: erster Keil
- 10: zweiter Keil
- 11: Justierstange
- 12: Mitnehmer
- 13: mechanische Kopplung
- 14: Zugfeder
- 15: Klemmblock
- 16: axiale Bohrung
- 17: Schnittkante
- 18: Aktuator der Verstellvorrichtung
- 19: Drehdurchführung
- 20: Sensor
- 21: Nockenkamm
- 22: Nockenmitnehmer
- 23: Materialausnehmung
- 24: Gleitlager
- 25: Druckscheibe
- 26: Lager
- 27: Druckfeder
- 28: mechanische Führung
- 29: Druckplatte
- 30: Übergangsbereich
- 31: Mantelfläche
- 32: Trommelschaft
- 33: offene Position
- 34: geschlossene Position
- 35: Messerjustierposition
- 36: Verstellvorrichtung
- 37: Steuervorrichtung
- 38: Regelvorrichtung
- 39: Sensor Klemmvorrichtung
- 40: Signaltechnische Anbindung an Prozessleitebene
- 41: radiale Nut
- 42: Rollen

## Patentansprüche

1. Trommelschere mit zwei Messertrommeln zum Querteilen eines Metallbandes (1), wobei die Messertrommeln (2) beim Querteilen quer zur Bandlaufrichtung (3) über einen Exzenter zwischen einer offenen und einer geschlossenen Position verfahrbar sind und zum Einstellen des Messerspalts (4) eine Messertrommel (2) folgende Merkmale aufweist:
- ein in axialer Richtung angeordnetes und in einer senkrecht dazu verlaufenden tangentialen Richtung verschiebbares Messer (5) mit zumindest einer ebenen Fläche (6);
- eine Klemmvorrichtung (7) mit zumindest einem Aktuator (8) ;
- zwei in axialer Richtung angeordnete Keile mit je einer Keilfläche, wobei das Messer (5) über den ersten, in axialer Richtung verschiebbaren Keil (9) in einer senkrecht dazu verlaufenden tangentialen Richtung verfahrbar ist und der zweite Keil (10) fest mit der Messertrommel (2) verbunden ist;
- eine zentrale, entlang der Trommelachse angeordnete, zum Teil aus der Messertrommel hinausragende und mit der Messertrommel (2) mitrotierende Justierstange (11) zum Verfahren des ersten Keiles (9), einen Mitnehmer (12) und eine mechanische Kopplung (13), wobei der erste Keil (9) durch den Mitnehmer (12) über die mechanische Kopplung (13) von der Justierstange (11) in axialer Richtung verschiebbar ist;
- eine Verstellvorrichtung (36) zum Verschieben der Justierstange (11) in axialer Richtung mittels des Aktuators 18; und
- eine Steuervorrichtung (37), die mit der Verstellvorrichtung (36) und der Klemmvorrichtung (7) signaltechnisch verbunden ist, sodass mittels eines Aktuators (8) der Klemmvorrichtung (7) die Messerklemmung gelöst und das Messer (5) durch das Betätigen der Verstellvorrichtung (36) in einer senkrecht zur axialen Richtung verlaufenden tangentialen Richtung verfahrbar ist.

2. Vorrichtung nach Anspruch 1, **dadurch gekennzeichnet, dass** die Klemmvorrichtung (7) Zugfedern (14) aufweist und hydraulisch durch den Aktuator (8) lösbar ist und ein Hydraulikfluid von einem Bereich außerhalb der Messertrommel (2) über eine Drehdurchführung (19) und eine axiale Bohrung (16) in der Justierstange (11) zum Aktuator leitbar ist.

3. Vorrichtung nach Anspruch 1 oder 2, **dadurch gekennzeichnet, dass** die Steuervorrichtung (37) mit einer Regelvorrichtung (38) verbunden ist, **und dass** die Verstellvorrichtung (36) zumindest einen Sensor (20) besitzt, der die Position eines bewegten Teiles der Verstellvorrichtung (36) an die Regelvorrichtung (38) rückmeldet, woraus die Position des ersten Keiles (9) folgt, wobei die Regelvorrichtung (38) den Messerspalt (4) in Abhängigkeit der Dicke und der Materialeigenschaften des zu schneidenden Metallbandes (1) berechnet und anhand des Sensors (20) der Verstellvorrichtung (36) über die Steuervorrichtung (37) regelt, **sowie dass** der Zustand der Klemmeinrichtung (7) über einen Sensor (39) erfasst und der Regeleinrichtung (38) rückmeldbar ist.

4. Vorrichtung nach einem der Ansprüche 1 bis 3, **dadurch gekennzeichnet, dass** die mechanische Kopplung (13) zwischen dem ersten Keil (9) und dem Mitnehmer (12) derart ausgeführt ist, dass der erste Keil (9) einen Nockenkamm (22) besitzt und der Mitnehmer (12) über einen Nockenmitnehmer (23) in den Nockenkamm (22) des ersten Keils (9) eingreift, sodass der erste Keil (9) vom Mitnehmer (12) in axialer Richtung bewegbar ist.

5. Vorrichtung nach einem der Ansprüche 1 bis 4, **dadurch gekennzeichnet, dass** der Mitnehmer (12) über eine starre Verbindung zur Justierstange (11) verfügt und **dass** die Messertrommel (2) im Bereich des Mitnehmers (12) über eine Materialausnehmung (23) verfügt, sodass der Mitnehmer (12) im Innenbereich der Messertrommel (2) zwischen den beiden Endlagen in axialer Richtung verfahrbar ist, wobei die Endlagen des Mitnehmers (12) dem maximal bzw. minimal einstellbaren Messerspalt (4) entsprechen.

6. Vorrichtung nach einem der Ansprüche 1 bis 5, **dadurch gekennzeichnet, dass** die Justierstange (11) am innerhalb der Messertrommel (2) liegenden Ende sowie an mindestens einer weiteren Stelle mittels eines Gleitlagers (24) in der Messertrommel (2) gelagert und mit der Messertrommel (2) verbunden ist und am außerhalb der Messertrommel (2) liegenden Ende mit einer nichtrotierenden, Axialkräfte übertragenden Druckscheibe (25) über zumindest ein Lager (26) verbunden ist, sodass die Justierstange (11) über die Druckscheibe (25) in axialer Richtung mittels der Verstellvorrichtung (36) bewegbar ist, wobei sich am innerhalb der Messertrommel (2) liegenden Ende der Justierstange (11) eine Druckfeder (27) befindet, die ein Spiel der Justierstange in axialer Richtung eliminiert.

7. Vorrichtung nach Anspruch 6, **dadurch gekennzeichnet, dass** die Druckscheibe (25) in allen über den Exzenter quer zur Bandlaufrichtung angestellten Positionen der Messertrommel (2) über eine mechanische Führung (28) mit einer Druckplatte (29) verbunden ist, die von der Verstellvorrichtung (36) bewegbar ist, wobei die Verstellvorrichtung (36) feststehend ist.

8. Vorrichtung nach Anspruch 6 oder 7, **dadurch gekennzeichnet, dass** die Messerspaltverstellung in der offenen Position der Messertrommel (2) erfolgt, wobei beim Verfahren der Druckplatte (29) in axialer Richtung die mechanische Führung (28) zwischen der Druckplatte (29) und der Druckscheibe (25) so ausgeführt ist, dass ein Kippmonent auf die Druckscheibe (25) vermieden wird.

9. Vorrichtung nach einem der Ansprüche 6 bis 8, **dadurch gekennzeichnet, dass** die Verstellvorrichtung (36) einen hydraulischer Aktuator (18) zum Verfahren der Justierstange (11) in axialer Richtung besitzt.

10. Vorrichtung nach einem der Ansprüche 6 bis 9, **dadurch gekennzeichnet, dass** durch den mindestens einen Sensor (20) der Verstellvorrichtung (36) die Position der Druckplatte (29) erfasst und an die Regeleinrichtung (38) übermittelt wird.

11. Vorrichtung nach einem der Ansprüche 5 bis 10, **dadurch gekennzeichnet, dass** der Übergangsbereich (30) an beiden Seiten der Messertrommel (2) zwischen dem Ende der Mantelfläche (31) der Messertrommel (2) und dem Trommelschaft (32) gerundet und auspoliert ist, sodass mechanische Spitzenspannungen aufgrund der für die Justierstange (11), den Mitnehmer (12), die mechanische Kopplung (13), die Gleitlager (24) und die Druckfeder (27) nötigen Materialausnehmungen in der Trommel vermeidbar sind.

12. Verfahren zum Verstellen eines Messerspalts (4) einer Trommelschere mit zwei Messertrommeln (2) zum Querteilen von Metallband, wobei die Messertrommeln (2) über einen Exzenter quer zur Bandlaufrichtung (3) zwischen einer offenen Position (33) und einer geschlossenen Position (34) verfahren werden und sich die Messertrommeln (2) zwischen den Zeitpunkten, an denen das Metallband quergeteilt wird, in der offenen Position (33) befinden und das Metallband zwischen den Messertrommeln (34) durchgefördert wird und die Messertrommeln (2) mit einer Winkelgeschwindigkeit rotieren, die der Bandlaufgeschwindigkeit entspricht, und wobei zumindest eine Messertrommel die folgenden Merkmale aufweist:
- ein in axialer Richtung angeordnetes und in einer senkrecht dazu verlaufenden tangentialen Richtung verschiebbares Messer (5) mit zumindest einer ebenen Fläche (6);
- eine Klemmvorrichtung (7) zur Klemmung des Messers (5) ;
- eine Vorrichtung zum Verfahren des Messers (5) in einer senkrecht zur axialen Richtung verlaufenden tangentialen Richtung zur Verstellung des Messerspalts (4), bestehend aus zumindest zwei axial angeordneten Keilen (9,10), wobei zumindest der erste Keil (9) in axialer Richtung beweglich angeordnet ist; und
- eine Verstellvorrichtung (36) zur Verschiebung des ersten Keiles (9) in axialer Richtung, wobei die Verstellvorrichtung (36) und die Klemmvorrichtung (7) von außerhalb der Messertrommel (2) betätigbar sind und wobei der Verstellvorgang folgende Schritte umfasst:
- Abbremsen der Messertrommeln (2) aus der Bandlaufgeschwindigkeit und Verdrehen der Messertrommel mit dem in einer senkrecht zur axialen Richtung verlaufenden tangentialen Richtung verschiebbaren Messer (5) um die eigene Achse in die Messerjustierposition (35), wobei das Messer (5) in ungeklemmtem Zustand von der Schwerkraft in der Messertrommel (2) gehalten wird;
- Lösen der Klemmvorrichtung (7);
- Einstellen des gewünschten Messerspaltes (4) durch Verfahren des ersten Keiles (9) in axialer Richtung durch Betätigung der Verstellvorrichtung (36);
- Feststellen der Klemmvorrichtung (7); und
- Beschleunigen der Messertrommeln (2) auf die Bandlaufgeschwindigkeit.

13. Verfahren nach Anspruch 12, **dadurch gekennzeichnet, dass** das Einstellen des gewünschten Messerspalts (4) durch Betätigung der Verstellvorrichtung (36) in Abhängigkeit der Dicke und der Materialeigenschaften des querzuteilenden Metallbandes (1) von einer Regelvorrichtung (38) durchgeführt wird, wobei die Verstellvorrichtung (36) über zumindest einen Sensor (20) zur Erfassung der Position eines bewegten Teiles der Verstellvorrichtung (36) verfügt, aus der die Position des ersten Keiles (9) folgt, und die auch über einen Sensor (39) der Klemmvorrichtung (7) den funktionalen Zustand der Klemmvorrichtung (7) erfasst und die Klemmvorrichtung (7) betätigt, sodass der gesamte Vorgang der Messerspaltverstellung automatisiert abläuft.

14. Verfahren nach Anspruch 12 oder 13, **dadurch gekennzeichnet, dass** das Einstellen des gewünschten Messerspalts (4) während des laufenden Produktionsbetriebes erfolgt, sodass für die Messerspaltverstellung keine zusätzliche Rüstzeit erforderlich ist.

## Claims

1. Drum shears having two blade drums for cross-cutting a metal strip (1), wherein, during cross-cutting, the blade drums (2) are movable transversely to the strip running direction (3) via an eccentric between an open and a closed position and, to set the blade gap (4), a blade drum (2) has the following features:
- a blade (5) having at least one planar surface (6), which blade is arranged in the axial direction and is displaceable in a tangential direction extending perpendicularly thereto;
- a clamping device (7) having at least one actuator (8);
- two wedges arranged in the axial direction each having a wedge surface, wherein the blade (5) is movable via the first wedge (9), which is displaceable in the axial direction, in a tangential direction extending perpendicularly thereto, and the second wedge (10) is fixedly connected to the blade drum (2);
- a central adjusting rod (11) for moving the first wedge (9), which adjusting rod is arranged along the drum axis, projects partially from the blade drum and corotates with the blade drum (2), a driver (12) and a mechanical coupling (13), wherein the first wedge (9) is displaceable by the adjusting rod (11) in the axial direction by means of the driver (12) via the mechanical coupling (13);
- an adjusting device (36) for displacing the adjusting rod (11) in the axial direction by means of the actuator (18); and
- a control device (37) which is connected by means of signals to the adjusting device (36) and the clamping device (7), with the result that the blade clamping is released by means of an actuator (8) of the clamping device (7) and the blade (5) is movable by the actuation of the adjusting device (36) in a tangential direction extending perpendicularly to the axial direction.

2. Device according to Claim 1, **characterized in that** the clamping device (7) has tension springs (14) and can be hydraulically released by the actuator (8), and a hydraulic fluid can be channelled to the actuator from a region outside the blade drum (2) via a rotary leadthrough (19) and an axial bore (16) in the adjusting rod (11).

3. Device according to Claim 1 or 2, **characterized in that** the control device (37) is connected to a regulating device (38), **and in that** the adjusting device (36) has at least one sensor (20) which feeds back the position of a moving part of the adjusting device (36) to the regulating device (38), from which the position of the first wedge (9) follows, wherein the regulating device (38) calculates the blade gap (4) in dependence on the thickness and the material properties of the metal strip (1) to be cut and regulates it by means of the sensor (20) of the adjusting device (36) via the control device (37), **and in that** the state of the clamping device (7) is detected by a sensor (39) and can be fed back to the regulating device (38).

4. Device according to one of Claims 1 to 3, **characterized in that** the mechanical coupling (13) between the first wedge (9) and the driver (12) is configured in such a way that the first wedge (9) has a cam ridge (22) and the driver (12) engages via a cam driver (23) in the cam ridge (22) of the first wedge (9), with the result that the first wedge (9) can be moved by the driver (12) in the axial direction.

5. Device according to one of Claims 1 to 4, **characterized in that** the driver (12) has a rigid connection to the adjusting rod (11), **and in that** the blade drum (2) has a material cutout (23) in the region of the driver (12), with the result that the driver (12) is movable in the inner region of the blade drum (2) between the two end positions in the axial direction, wherein the end positions of the driver (12) correspond to the maximum or minimum settable blade gap (4).

6. Device according to one of Claims 1 to 5, **characterized in that,** at the end situated within the blade drum (2) and at at least one further point, the adjusting rod (11) is mounted in the blade drum (2) by means of a sliding bearing (24) and connected to the blade drum (2), and, at the end situated outside the blade drum (2), is connected via at least one bearing (26) to a non-rotating pressure disc (25) which transmits axial forces, with the result that the adjusting rod (11) is movable via the pressure disc (25) in the axial direction by means of the adjusting device (36), wherein a compression spring (27) is situated at the end of the adjusting rod (11) that is situated within the blade drum (2), which compression spring eliminates a play of the adjusting rod in the axial direction.

7. Device according to Claim 6, **characterized in that** the pressure disc (25) is connected to a pressure plate (29) via a mechanical guide (28) in all positions of the blade drum (2) that are set transversely to the strip running direction via the eccentric, which pressure plate can be moved by the adjusting device (36), wherein the adjusting device (36) is fixed.

8. Device according to Claim 6 or 7, **characterized in that** the blade gap adjustment takes place in the open position of the blade drum (2), wherein, during movement of the pressure plate (29) in the axial direction, the mechanical guide (28) between the pressure plate (29) and the pressure disc (25) is configured such that a tilting moment onto the pressure disc (25) is avoided.

9. Device according to one of Claims 6 to 8, **characterized in that** the adjusting device (36) has a hydraulic actuator (18) for moving the adjusting rod (11) in the axial direction.

10. Device according to one of Claims 6 to 9, **characterized in that** the position of the pressure plate (29) is detected and transmitted to the regulating device (38) by the at least one sensor (20) of the adjusting device (36).

11. Device according to one of Claims 5 to 10, **characterized in that** the transition region (30) on both sides of the blade drum (2) between the end of the lateral surface (31) of the blade drum (2) and the drum shaft (32) is rounded and polished out, with the result that it is possible to avoid mechanical peak stresses on account of the material cutouts in the drum that are necessary for the adjusting rod (11), the driver (12), the mechanical coupling (13), the sliding bearings (24) and the compression spring (27).

12. Method for adjusting a blade gap (4) of drum shears having two blade drums (2) for cross-cutting metal strip, wherein the blade drums (2) are moved via an eccentric transversely to the strip running direction (3) between an open position (33) and a closed position (34), and the blade drums (2) are situated in the open position (33) between the times at which the metal strip is cross-cut, and the metal strip is conveyed through between the blade drums (34), and the blade drums (2) rotate with an angular speed which corresponds to the strip running speed, and wherein at least one blade drum has the following features:
- a blade (5) having at least one planar surface (6), which blade is arranged in the axial direction and is displaceable in a tangential direction extending perpendicularly thereto;
- a clamping device (7) for clamping the blade (5);
- a device for moving the blade (5) in a tangential direction for adjusting the blade gap (4) that extends perpendicularly to the axial direction, consisting of at least two axially arranged wedges (9, 10), wherein at least the first wedge (9) is arranged so as to be movable in the axial direction; and
- an adjusting device (36) for displacing the first wedge (9) in the axial direction, wherein the adjusting device (36) and the clamping device (7) can be actuated from outside the blade drum (2), and wherein the adjusting operation comprises the following steps:
- braking the blade drums (2) from the strip running speed and rotating the blade drum with the blade (5) displaceable in a tangential direction extending perpendicularly to the axial direction about its own axis into the blade-adjusting position (35), wherein the blade (5) is held in the unclamped state by gravity in the blade drum (2);
- releasing the clamping device (7);
- setting the desired blade gap (4) by moving the first wedge (9) in the axial direction by actuating the adjusting device (36);
- fixing the clamping device (7); and
- accelerating the blade drums (2) to the strip running speed.

13. Method according to Claim 12, **characterized in that** the setting of the desired blade gap (4) is carried out by means of actuating the adjusting device (36) in dependence on the thickness and the material properties of the metal strip (1) to be cross-cut by a regulating device (38), wherein the adjusting device (36) has at least one sensor (20) for detecting the position of a moving part of the adjusting device (36), from which the position of the first wedge (9) follows, and which also detects the functional state of the clamping device (7) via a sensor (39) of the clamping device (7) and actuates the clamping device (7), with the result that the total operation of the blade gap adjustment proceeds in an automated manner.

14. Method according to Claim 12 or 13, **characterized in that** the setting of the desired blade gap (4) occurs while the production operation is in progress, with the result that no additional equipping time is required for the blade gap adjustment.

## Revendications

1. Cisaille à tambour comprenant deux tambours à lame pour la découpe transversale d'une bande métallique (1), les tambours à lame (2) étant déplaçables lors de la découpe transversale transversalement au sens de défilement de la bande (3) par l'intermédiaire d'un excentrique entre une position ouverte et une position fermée, et pour régler l'écart entre lames (4) un tambour à lame (2) présentant les caractéristiques suivantes :
- une lame (5) disposée en direction axiale et mobile selon une direction tangentielle perpendiculaire à celle-ci, avec au moins une face plane (6) ;
- un dispositif de serrage (7), avec au moins un actionneur (8) ;
- deux coins agencés en direction axiale ayant chacun une face de coin, la lame (5) étant déplaçable par l'intermédiaire du premier coin (9) mobile en direction axiale selon une direction tangentielle perpendiculaire à celle-ci, et le deuxième coin (10) étant solidaire du tambour à lame (2) ;
- une barre d'ajustage (11) centrale, disposée le long de l'axe de tambour, dépassant partiellement du tambour à lame et entraînée en rotation avec le tambour à lame (2), pour déplacer le premier coin (9), un doigt d'entraînement (12) et un couplage mécanique (13), le premier coin (9) pouvant être déplacé en direction axiale par la barre d'ajustage (11) grâce au doigt d'entraînement (12) via le couplage mécanique (13) ;
- un dispositif de réglage (36) pour déplacer la barre d'ajustage (11) en direction axiale au moyen de l'actionneur (18) ; et
- un dispositif de commande (37) relié par signalisation au dispositif de réglage (36) et au dispositif de serrage (7), de sorte à débloquer le serrage de la lame au moyen d'un actionneur (8) du dispositif de serrage (7) et à pouvoir déplacer la lame (5) par actionnement du dispositif de réglage (36) selon une direction tangentielle perpendiculaire à la direction axiale.

2. Dispositif selon la revendication 1, **caractérisé en ce que** le dispositif de serrage (7) comporte des ressorts de traction (14) et peut être débloqué hydrauliquement par l'actionneur (8), et un fluide hydraulique peut être amené vers ledit actionneur depuis une zone située à l'extérieur du tambour à lame (2) via un passage tournant (19) et un alésage axial (16) ménagés dans la barre d'ajustage (11).

3. Dispositif selon la revendication 1 ou 2, **caractérisé en ce que** le dispositif de commande (37) est relié à un dispositif de régulation (38), **et en ce que** le dispositif de réglage (36) possède au moins un capteur (20) qui communique au dispositif de régulation (38) la position d'un élément en mouvement du dispositif de réglage (36), de laquelle découle la position du premier coin (9), le dispositif de régulation (38) calculant l'écart entre lames (4) en fonction de l'épaisseur et des propriétés de matière de la bande métallique (1) à couper et réglant ledit écart (4) à l'aide du capteur (20) du dispositif de réglage (36) par l'intermédiaire du dispositif de commande (37), **et en ce que** l'état du dispositif de serrage (7) est détecté par un capteur (39) et peut être communiqué au dispositif de régulation (38).

4. Dispositif selon l'une des revendications 1 à 3, **caractérisé en ce que** le couplage mécanique (13) entre le premier coin (9) et le doigt d'entraînement (12) est tel que le premier coin (9) possède une crête de came (22) et que le doigt d'entraînement (12) vient s'engager dans la crête de came (22) du premier coin (9) par l'intermédiaire d'un poussoir de came (23), de telle sorte que le premier coin (9) peut être déplacé par le doigt d'entraînement (12) en direction axiale.

5. Dispositif selon l'une des revendications 1 à 4, **caractérisé en ce que** le doigt d'entraînement (12) dispose d'une liaison rigide avec la barre d'ajustage (11) et **en ce que** le tambour à lame (2) dispose au niveau du doigt d'entraînement (12) d'un évidement de matière (23), de telle sorte que le doigt d'entraînement (12) peut être déplacé en direction axiale à l'intérieur du tambour à lame (2) entre les deux positions de fin de course, lesdites positions de fin de course du doigt d'entraînement (12) correspondant à l'écart entre lames (4) minimum et maximum.

6. Dispositif selon l'une des revendications 1 à 5, **caractérisé en ce que** la barre d'ajustage (11) est logée à l'extrémité située à l'intérieur du tambour à lame (2) et à au moins un autre endroit au moyen d'un palier lisse (24) dans le tambour à lame (2) et est reliée au tambour à lame (2), et à l'extrémité située à l'extérieur du tambour à lame (2), elle est reliée par au moins un palier (26) à un disque de pression (25) non rotatif transmettant des forces axiales, de telle sorte que la barre d'ajustage (11) peut être déplacée au moyen du dispositif de réglage (36) en direction axiale par l'intermédiaire du disque de pression (25), un ressort de pression (27) étant prévu à l'extrémité située à l'intérieur du tambour à lame (2) de la barre d'ajustage (11), ressort qui élimine un jeu de la barre d'ajustage en direction axiale.

7. Dispositif selon la revendication 6, **caractérisé en ce que** le disque de pression (25) est relié dans toutes les positions du tambour à lame (2) réglées par l'intermédiaire de l'excentrique transversalement au sens de défilement de la bande via un guidage mécanique (28) à un disque de pression (29) pouvant être déplacé par le dispositif de réglage (36), le dispositif de réglage (36) étant fixe.

8. Dispositif selon la revendication 6 ou 7, **caractérisé en ce que** le réglage de l'écart entre lames a lieu dans la position ouverte du tambour à lame (2), lors du déplacement du disque de pression (29) en direction axiale le guidage mécanique (28) entre le disque de pression (29) et le disque de pression (25) étant tel qu'un couple de renversement sur le disque de pression (25) est évité.

9. Dispositif selon l'une des revendications 6 à 8, **caractérisé en ce que** le dispositif de réglage (36) possède un actionneur hydraulique (18) pour déplacer la barre d'ajustage (11) en direction axiale.

10. Dispositif selon l'une des revendications 6 à 9, **caractérisé en ce que** le au moins un capteur (20) du dispositif de réglage (36) détecte la position du disque de pression (29) et la transmet au dispositif de régulation (38).

11. Dispositif selon l'une des revendications 5 à 10, **caractérisé en ce que** la zone de transition (30) des deux côtés du tambour à lame (2) entre l'extrémité de la surface d'enveloppe (31) du tambour à lame (2) et la tige de tambour (32) est arrondie et polie, permettant ainsi d'éviter des contraintes mécaniques maximales dans le tambour dues aux évidements de matière nécessaires pour la barre d'ajustage (11), le doigt d'entraînement (12), le couplage mécanique (13), les paliers lisses (24) et le ressort de pression (27).

12. Procédé de réglage de l'écart entre lames (4) d'une cisaille à tambour comprenant deux tambours à lame (2) pour la découpe transversale d'une bande métallique, les tambours à lame (2) étant déplacés transversalement au sens de défilement de la bande (3) par l'intermédiaire d'un excentrique entre une position ouverte (33) et une position fermée (34) et les tambours à lame (2) étant dans la position ouverte (33) entre les moments où la bande métallique est découpée transversalement, et la bande métallique passant entre les tambours à lame (34) et les tambours à lame (2) tournant à une vitesse angulaire qui correspond à la vitesse de défilement de la bande, et au moins un tambour à lame présentant les caractéristiques suivantes :
- une lame (5) disposée en direction axiale et mobile selon une direction tangentielle perpendiculaire à celle-ci, avec au moins une face plane (6) ;
- un dispositif de serrage (7) pour serrer la lame (5) ;
- un dispositif pour déplacer la lame (5) selon une direction tangentielle perpendiculaire à la direction axiale en vue du réglage de l'écart entre lames (4), constitué d'au moins deux coins (9, 10) disposés axialement, au moins le premier coin (9) étant disposé de manière à être mobile en direction axiale ; et
- un dispositif de réglage (36) pour déplacer le premier coin (9) en direction axiale, le dispositif de réglage (36) et le dispositif de serrage (7) pouvant être actionnés depuis l'extérieur du tambour à lame (2) et le processus de réglage comprenant les étapes suivantes :
- décélération des tambours à lame (2) à partir de la vitesse de défilement de la bande et rotation du tambour à lame, avec la lame (5) déplaçable dans une direction tangentielle perpendiculaire à la direction axiale, autour de son axe jusque dans la position d'ajustage de la lame (35), la lame (5) à l'état non serré étant maintenue par gravité dans le tambour à lame (2) ;
- déblocage du dispositif de serrage (7) ;
- réglage de l'écart entre lames (4) souhaité, en déplaçant le premier coin (9) en direction axiale par actionnement du dispositif de réglage(36) ;
- blocage du dispositif de serrage (7) ; et
- accélération des tambours à lame (2) jusqu'à la vitesse de défilement de la bande.

13. Procédé selon la revendication 12, **caractérisé en ce que** le réglage de l'écart entre lames (4) souhaité par actionnement du dispositif de réglage (36) est effectué par un dispositif de régulation (38) en fonction de l'épaisseur et des propriétés de matière de la bande métallique (1) à découper transversalement, le dispositif de réglage (36) disposant d'au moins un capteur (20) pour détecter la position d'un élément en mouvement du dispositif de réglage (36), de laquelle découle la position du premier coin (9), et qui détecte également via un capteur (39) du dispositif de serrage (7) l'état fonctionnel du dispositif de serrage (7) et actionne le dispositif de serrage (7), de telle sorte que l'ensemble du processus de réglage de l'écart entre lames s'effectue de façon automatisée.

14. Procédé selon la revendication 12 ou 13, **caractérisé en ce que** le réglage de l'écart entre lames (4) souhaité a lieu pendant la phase de production en cours, de telle sorte que le réglage de l'écart entre lames ne nécessite aucun temps de préparation supplémentaire.
